# EUROPÄISCHE PATENTANMELDUNG

(11) **EP 2 093 806 A1**
(43) Veröffentlichungstag der Anmeldung: **26.08.2009**
(21) Anmeldenummer: 09153121.0
(22) Anmeldetag: 18.02.2009
(51) Int. Cl.: H01L 31/048

(54) **Elektrische Anschluss- und Verbindungsdose für ein Solarzellenmodul**

(30) Priorität: 20.02.2008 DE 102008010026
(71) Anmelder: Kostal Industrie Elektrik GmbH, 58513 Lüdenscheid (DE)
(72) Erfinder: Rüggen, Christian, 44805, Bochum (DE); Dickmann, Axel, 58509, Lüdenscheid (DE)
(74) Vertreter: Kerkmann, Detlef

(57) **Zusammenfassung**

Eine elektrische Anschluss- und Verbindungsdose für ein mit dünnen Leiterbändern angeschlossene Solarzellen umfassendes Solarzellenmodul mit einem Gehäuse, in dem eine zumindest eine Klemmfeder zur Kontaktierung eines Leiterbandes aufweisende Anschlusseinrichtung aufgenommen ist, ist dadurch gekennzeichnet, dass die Klemmfeder und das Gehäuse mit Mitteln zum Fixieren der Klemmfeder in einer geöffneten Stellung versehen sind.

## Beschreibung

Die Erfindung betrifft eine elektrische Anschluss- und Verbindungsdose für ein mit dünnen Leiterbändern angeschlossene Solarzellen umfassendes Solarzellenmodul mit einem Gehäuse, in dem eine zumindest eine Klemmfeder zur Kontaktierung eines Leiterbandes aufweisende Anschlusseinrichtung aufgenommen ist.

Die Anschlusseinrichtung derartiger Anschluss- und Verbindungsdosen für Solarzellenmodule kontaktiert dabei einerseits die üblicherweise als Flachbänder ausgeführten Anschlussleiter der Solarzellenmodule und andererseits die z.B. zu einem Wechselrichter führenden Ausgangsleitungen.

Die Solarzellen in einem Solarzellenmodul sind im allgemeinen mit dünnen Leiterbändern miteinander verbunden. Diese Leiterbänder weisen typischerweise eine Dicke von wenigen Zehntel Millimetern und eine Breite von einigen Millimetern auf. Diese die einzelnen Solarzellen des Solarzellenmoduls miteinander verbindenden Leiterbänder werden aus dem Solarzellenmodul heraus geführt, so dass die dünnen Leiterbänder direkt zu Anschlusszwecken verwendet werden können.

Zum Anschluss werden die Leiterbänder typischerweise in die elektrische Anschluss- und Verbindungsdose, die einen abnehmbaren Deckel aufweist, von unten her eingeführt, so dass die einzelnen Leiterbänder von Hand mit der in dem Gehäuse der Anschluss- und Verbindungsdose vorgesehenen elektrischen Anschlusseinrichtung kontaktiert werden können. Die Anschlusseinrichtung umfasst dabei sogenannte Stromschienen, die als Stanz-Biegeteile aus einem Blechmaterial mit einer guten elektrischen Leitfähigkeit hergestellt sind und zur Verbindung der Potentiale dienen. Zur Kontaktierung der Leiterbänder mit diesen Stromschienen sind Klemmfedern vorgesehen, die in Anschlussbereichen auf diesen aufgesteckt sind.

Die vom Solarzellenmodul, relativ zum Gehäuse der Anschluss- und Verbindungsdose von unten her kommenden, dünnen Leiterbänder werden dazu umgebogen, um dann von oben her kommend über die Klemmfedern mit den Stromschienen kontaktiert und somit an die Anschlussvorrichtung angeschlossen zu werden.

Die Klemmfedern sollen dabei im Ausgangszustand ein möglichst geringes Spaltmaß im Klemmbereich haben, damit die mit der Klemmfeder auf die Leiterbänder ausgeübte Andruckkraft schon bei sehr dünnen Bändern ausreichend hoch ist. Daraus ergibt sich jedoch schon im Grundzustand, in dem die Klemmfeder bereits dadurch vorgespannt ist, dass sie auf die Stromschiene montiert und dadurch geweitet ist, eine relativ hohe Andruckkraft, so dass es nicht möglich ist, die dünnen Leiterbänder ohne weiteres zwischen Klemmfeder und Stromschiene zu schieben.
Zum Anschließen des Leiterbandes muss daher die Klemmfeder mit Hilfe eines Hebelwerkzeugs wie z.B. eines Schraubendrehers aufgezogen und in der geöffneten Stellung gehalten werden, damit dann das Leiterband problemlos in die Kontaktierungsposition geschoben werden kann. Eine solche Handhabung erweist sich jedoch in der Praxis als umständlich und gerade dann, wenn eine Montage unter erschwerten Bedingungen, etwa auf dem Dach stattfindet, sogar als gefährlich.

Die erfindungsgemäße Anschluss- und Verbindungsdose ermöglicht dagegen eine wesentlich leichtere und bequemere Handhabung beim Anschließen der dünnen Leiterbänder und trägt damit nicht unerheblich zur Verbesserung der Arbeitssicherheit bei.

Dies wird erfindungsgemäß dadurch erreicht, dass die Klemmfeder und das Gehäuse mit Mitteln zum Fixieren der Klemmfeder in einer geöffneten Stellung versehen sind.

Die Klemmfedern können dadurch bereits vor der Montage der Anschluss- und Verbindungsdose auf dem Solarmodul in ihre geöffnete Stellung gebracht und dort fixiert werden. Bei der Montage können dann die Leiterbänder eingeschoben werden, ohne dass gleichzeitig die Klemmfedern geöffnet gehalten werden müssen, was das Arbeiten, gerade wenn eine Montage unter erschwerten Bedingungen stattfindet, deutlich vereinfacht. Ist ein Leiterband in die gewünschte Position gebracht, kann die Klemmfeder leicht aus der Öffnungsstellung gelöst werden, und das Leiterband wird an die Stromschiene gedrückt.

Insbesondere können solche Anschluss- und Verbindungsdosen auch bereits Herstellerseitig mit Klemmfedern im geöffneten Zustand an den Kunden ausgeliefert werden, so dass dieser in der Fertigung eine einfachere und schnellere Montage der Leiterbänder vornehmen kann.

In einer bevorzugten Ausführungsform der Erfindung werden die Mittel zum Fixieren der Klemmfeder in einer geöffneten Stellung dadurch bereitgestellt, dass ein Federschenkel der Klemmfeder endseitig eine Lasche aufweist, die mit einer fensterförmigen Öffnung versehen ist, und dass an dem Gehäuse eine Rastnase angeformt ist, über die die Lasche der Klemmfeder gezogen werden kann, so dass die fensterförmige Öffnung mit ihrer hinteren Innenkante hinter der Rastnase einhakt.

Nachfolgend ist die Erfindung anhand eines Ausführungsbeispiels unter Bezugnahme auf die beigefügte Zeichnung erläutert.

Dabei zeigen:
- **Fig. 1:**: ein Solarzellenmodul mit einer erfindungsgemäßen Anschluss- und Verbindungsdose in einer räumlichen Ansicht von oben
- **Fig. 2:**: die Anschluss- und Verbindungsdose aus Fig. 1 im Längsschnitt entlang der Linie A-A
- **Fig. 3:**: den in Fig. 2 gekennzeichneten Ausschnitt als vergrößertes Detail mit der Klemmfeder in geschlossener Stellung
- **Fig. 4:**: den in Fig. 2 gekennzeichneten Ausschnitt als vergrößertes Detail mit der Klemmfeder in geöffneter Stellung

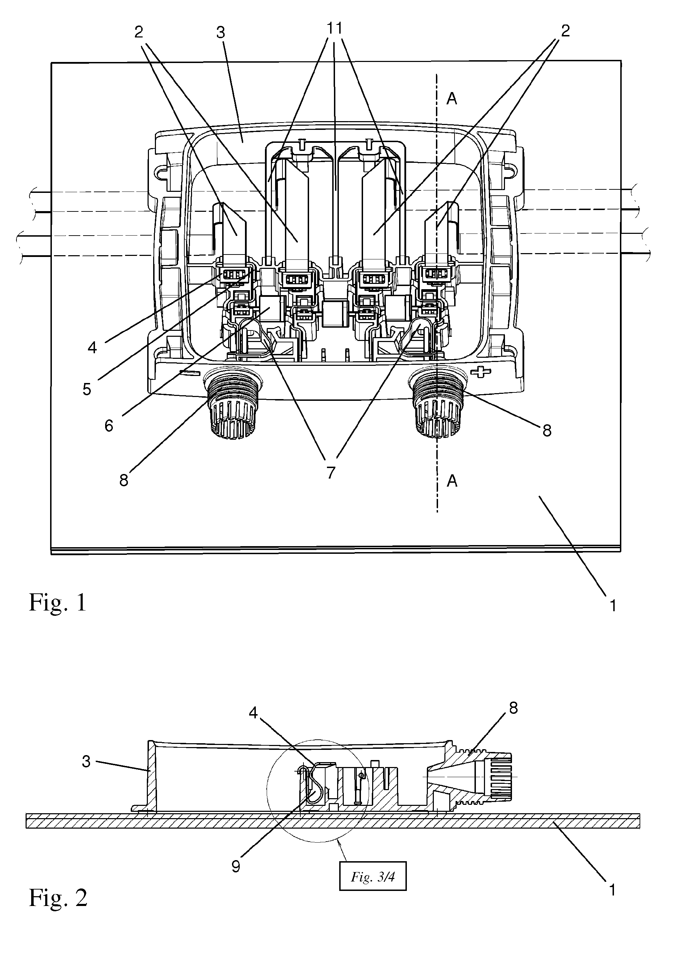

In Fig. 1 ist ein Solarzellenmodul 1 in einer räumlichen Ansicht von oben zu sehen. Die einzelnen Solarzellen des Solarzellenmoduls 1, die hier nicht zu erkennen sind, sind mit dünnen Leiterbändern 2 miteinander verbunden, die typischerweise eine Dicke von wenigen Zehntel Millimetern und eine Breite von einigen Millimetern aufweisen. Diese dünnen Leiterbänder 2 werden in einem Anschlussbereich aus dem Solarzellenmodul 1 heraus geführt und können dort direkt zu Anschlusszwecken verwendet werden.

In diesem Anschlussbereich ist eine erfindungsgemäße elektrische Anschluss- und Verbindungsdose auf das Solarzellenmodul 1 aufgesetzt. Zu sehen ist hier das Gehäuse 3 der Anschluss- und Verbindungsdose, von dem ein abnehmbarer Deckel entfernt ist. Die Leiterbänder 2 sind von unten her durch dafür vorgesehene Öffnungen in das Gehäuse 3 eingeführt, um dort von Hand mit der in dem Gehäuse 3 vorhandenen elektrischen Anschlusseinrichtung kontaktiert werden zu können.

Das Gehäuse ist durch Trennwände 11 in mehrere Kammern für jeweils nur ein einzelnes Leiterband 2 aufgeteilt. Diese Trennwände 11, die entweder, wie in der Zeichnung dargestellt, als separates Teil in das Gehäuse 3 eingesetzt werden können, oder aber alternativ hierzu direkt einstückig mit dem Gehäuse 3 ausgeformt werden können, verhindern, dass die einzelnen Leiterbänder 2, die jeweils nicht von einem Isoliermaterial umgeben sind, miteinander in Kontakt kommen, was einen Kurzschluss verursachen würde.

Die Anschlusseinrichtung umfasst mehrere als Stanz-Biegeteile aus einem Blechmaterial mit einer guten elektrischen Leitfähigkeit hergestellte Stromschienen 5, die zur Verbindung der Potentiale innerhalb der Anschlusseinrichtung dienen. Dabei sind die beiden außen, d.h. in der Fig. 1 innerhalb der Anschluss- und Verbindungsdose rechts und links liegenden Leiterbänder 2 direkt mit den zum Anschluss der z.B. direkt zu einem Wechselrichter oder zu weiteren Anschluss- und Verbindungsdosen führenden Ausgangsleitungen verbunden. Die beiden inneren Leiterbänder 2 sind miteinander sowie mit den beiden äußeren Leiterbändern 2 unter Zwischenschaltung jeweils einer sogenannten Bypass-Diode 6 verbunden. Diese Bypass-Dioden 6 sind antiparallel zu den Solarzellen geschaltet und bewirken, dass bei einer abgeschatteten Solarzelle innerhalb eines Solarzellenmoduls diese eine Solarzelle zwar keinen Anteil mehr zur Gesamtspannung des Solarzellenmoduls leistet, der Stromfluss jedoch trotzdem erhalten bleibt. Das Solarzellenmodul zeigt somit lediglich eine verminderte Betriebspannung, fällt jedoch nicht vollständig aus, wie dies ohne die Bypass-Dioden 6 der Fall wäre. Außerdem wird in der abgeschatteten Solarzelle keine Leistung mehr umgesetzt, so dass eine Beschädigung der abgeschatteten Solarzelle vermieden werden kann.

Die hier nicht dargestellten Ausgangsleitungen sind beispielsweise als isolierte Rundleiter ausgeführt, die in die an der Vorderseite des Gehäuses 3 erkennbaren, mit "+" bzw. "-" gekennzeichneten Anschlussöffnungen eingeführt, und mittels der direkt hinter den Anschlussöffnungen angeordneten Federklemmen 7 elektrisch kontaktiert werden. Durch Überwurfmuttern können die Ausgangsleitungen an den die Anschlussöffnungen umgebenden Gewinden 8 festgelegt werden.

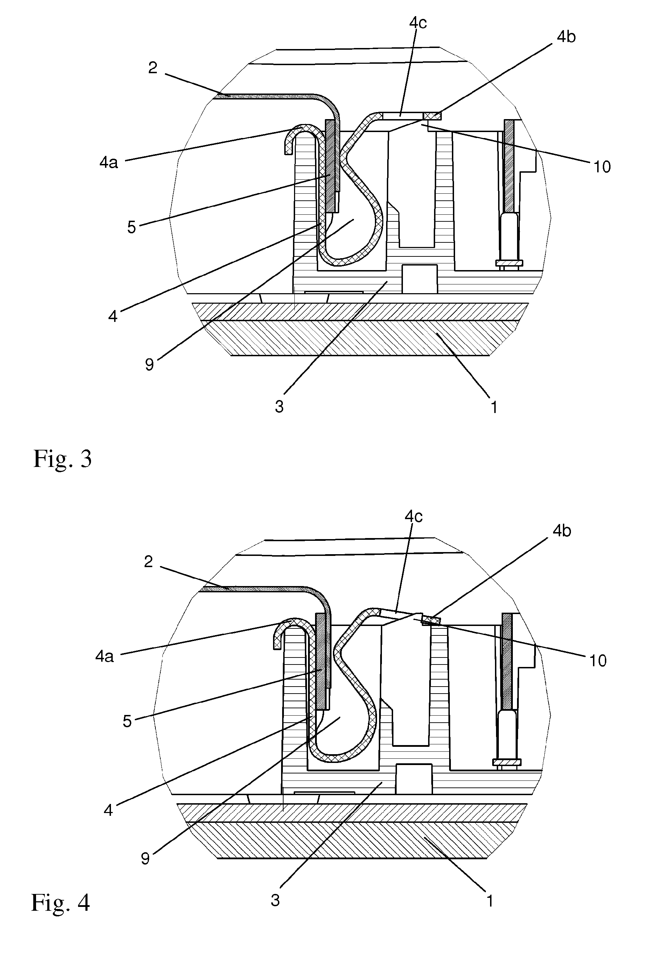

Zur Kontaktierung der Leiterbänder 2 mit diesen Stromschienen 5 sind Klemmfedern 4 vorgesehen. Wie in dem in Fig. 2 dargestellten Längsschnitt bzw. noch besser in den Detailvergrößerungen in Fig. 3 und 4 zu sehen, sind im dem Gehäuse 3 taschenartige Aufnahmen 9 vorhanden, in denen die auf die Stromschienen 5 aufgesteckten Klemmfedern 4 aufgenommen sind. Die Klemmfedern 4 weisen im Längsschnitt eine Kontur auf, die annähernd ein nach oben offenes "Omega" darstellt.

Die beiden Federschenkel der Klemmfeder 4 liegen, wie in Fig. 3 gezeigt, im Bereich ihrer größten Annäherung aneinander unter Federvorspannung an der Stromschiene 5 an und klemmen dabei das Leiterband 2 zwischen Stromschiene 5 und einem Federschenkel der Klemmfeder 4 fest. Das Ende des einen Federschenkels ist dabei mit einer halbkreisförmigen Abwinklung 4a versehen, die zur Fixierung der Klemmfeder 4 an dem Gehäuse 3 dient. Das Ende des anderen Federschenkels, der an dem dünnen Leiterband 2 anliegt, ist ebenfalls mit einer Abwinklung versehen, die in einer in Einbaulage der Klemmfeder 4 parallel zur Fläche des Solarmoduls 1 verlaufenden Lasche 4b ausläuft, welche ihrerseits mit einer fensterförmigen Öffnung 4c versehen ist.

Neben der taschenartige Aufnahme 9, in der die Klemmfeder 4 aufgenommen ist, ist an dem Gehäuse 3 eine Rastnase 10 angeformt. Über diese Rastnase 10 kann nun, wie in Fig. 4 zu sehen, die Lasche 4b der Klemmfeder 4 gezogen werden, so dass die fensterförmige Öffnung 4c mit ihrer hinteren Innenkante hinter der Rastnase 10 einhakt. Dies kann entweder bereits vor der Auslieferung der Anschluss- und Verbindungsdose an den Verwender erfolgen oder aber von diesem unmittelbar vor der Montage, beispielsweise unter Zuhilfenahme eines Hebelwerkzeugs, wie etwa eines Schraubendrehers vorgenommen werden. Die Klemmfeder 4 wird dadurch in ihrer geöffneten Stellung fixiert, so dass das Leiterband 2 leicht eingeführt werden kann. Zur Überführung in die geschlossene Position der Klemmfeder 4 kann diese leicht aus der eingehakten Stellung gelöst werden, und klemmt dann, wie in Fig. 3 gezeigt, das Leiterband 2 fest.

## Patentansprüche

1. Elektrische Anschluss- und Verbindungsdose für ein mit dünnen Leiterbändern (2) angeschlossene Solarzellen umfassendes Solarzellenmodul (1) mit einem Gehäuse (3), in dem eine zumindest eine Klemmfeder (4) zur Kontaktierung eines Leiterbandes (2) aufweisende Anschlusseinrichtung aufgenommen ist, **dadurch gekennzeichnet, dass** die Klemmfeder (4) und das Gehäuse (3) mit Mitteln zum Fixieren der Klemmfeder (4) in einer geöffneten Stellung versehen sind.

2. Elektrische Anschluss- und Verbindungsdose nach Anspruch 1, **dadurch gekennzeichnet, dass** ein Federschenkel der Klemmfeder (4) endseitig eine Lasche (4b) aufweist, die mit einer fensterförmigen Öffnung (4c) versehen ist, und dass an dem Gehäuse (3) eine Rastnase (10) angeformt ist, über die die Lasche (4b) der Klemmfeder (4) gezogen werden kann, so dass die fensterförmige Öffnung (4c) mit ihrer hinteren Innenkante hinter der Rastnase (10) einhakt.

3. Elektrische Anschluss- und Verbindungsdose nach Anspruch 1 oder 2, **dadurch gekennzeichnet, dass** die Anschlusseinrichtung zur Verbindung der Potentiale mehrere Stromschienen (5) umfasst, mit denen Klemmfedern (4) verbunden sind.

4. Elektrische Anschluss- und Verbindungsdose nach Anspruch 3, **dadurch gekennzeichnet, dass** die Stromschienen (5) Stanz-Biegeteile aus einem Blechmaterial mit einer guten elektrischen Leitfähigkeit sind.

5. Elektrische Anschluss- und Verbindungsdose nach Anspruch 3 oder 4, **dadurch gekennzeichnet, dass** im dem Gehäuse (3) taschenartige Aufnahmen (9) vorhanden sind, in denen die auf die Stromschienen (5) aufgesteckten Klemmfedern (4) aufgenommen sind.

6. Elektrische Anschluss- und Verbindungsdose nach einem der Ansprüche 1 bis 5, **dadurch gekennzeichnet, dass** das Gehäuse (3) durch Trennwände (11) in mehrere Kammern für jeweils nur ein einzelnes Leiterband (2) aufgeteilt ist.

7. Elektrische Anschluss- und Verbindungsdose nach Anspruch 6, **dadurch gekennzeichnet, dass** die Trennwände (11) als separates Teil in das Gehäuse (3) eingesetzt werden.

8. Elektrische Anschluss- und Verbindungsdose nach Anspruch 6, **dadurch gekennzeichnet, dass** die Trennwände (11) direkt einstückig mit dem Gehäuse (3) ausgeformt werden.
